# EUROPÄISCHE PATENTSCHRIFT

(11) **EP 2 460 717 B1**
(45) Veröffentlichungstag und Bekanntmachung des Hinweises auf die Patenterteilung: **22.01.2014**
(21) Anmeldenummer: 11005785.8
(22) Anmeldetag: 15.07.2011
(51) Int. Cl.: B62L 1/00, F16D 55/228, F16D 65/14

(54) **Bremszange einer hydraulischen Scheibenbremsanlage eines Zweirads**
Brake calliper of a hydraulic disc brake assembly for a two-wheeler
Etrier de frein d'une installation de frein à disque hydraulique pour un deux roues

(30) Priorität: 02.12.2010 DE 202010016054 U; 20.01.2011 EP 11000424
(43) Veröffentlichungstag der Anmeldung: 06.06.2012
(73) Patentinhaber: Brake Force One GmbH, 72074 Tübingen (DE)
(72) Erfinder: Lauhoff, Jakob, 72147 Nehren (DE)
(74) Vertreter: Kohler Schmid Möbus

(56) Entgegenhaltungen:
- EP-A1- 1 079 136
- DE-A1- 19 500 556
- DE-A1-102007 048 350
- DE-U- 1 899 643
- JP-A- 63 083 419
- JP-A- 2001 227 572
- TW-U- 559 183
- US-A1- 2009 293 715

## Beschreibung

Die Erfindung betrifft eine Bremszange einer hydraulischen Scheibenbremsanlage für ein Zweirad, insbesondere ein Fahrrad, gemäß dem Oberbegriff von Anspruch 1 sowie eine Bremsanlage mit einer solchen Bremszange und einer Betätigungsvorrichtung.

Bei Zweirädern, insbesondere Fahrrädern, Quads und Trikes, kommen vermehrt hydraulische Bremsen zum Einsatz, die nicht mehr auf die Felge des Laufrades wirken, sondern auf eine Bremsscheibe am Laufrad. Die Betätigung derartiger hydraulischer Bremsen erfolgt in der Regel über einen Handgriff, der vom Lenker absteht.

Bekannte Bremszangen solcher hydraulischer Bremsen weisen in der Bremszange einen oder mehrere Bremskolben auf, die durch die Betätigungsvorrichtung beim Bremsen über eine Hydraulikflüssigkeit mit Druck beaufschlagt werden.

Aus der DE 195 00 556 A1 ist eine mehrstufige hydraulische Bremse für Fahrräder bekannt. Dabei ist in der Bremszange ein mehrteiliger Kolben vorgesehen. Je nach Stellung eines Ventils werden unterschiedliche Bereiche des Kolbens mit Hydraulikflüssigkeit beaufschlagt, um dadurch einen Bremsdruck zu erzeugen.

Die DE 18 99 643, auf der der Oberbegriff von Anspruch 1 basiert, offenbart eine Scheibenbremse mit hydraulischen Betätigungszylindern auf beiden Seiten der Scheibe, die unterschiedliche Querschnitte aufweisen und so angeordnet sind, dass die Summen ihrer Anpresskräfte gleich sind. Die Anpresskräfte einzelner oder aller Zylinder sind durch additive Anordnung mehrerer Kolben in einem Zylinder und/oder durch Zuordnung von Druckübersetzern übersetzt.

Aus der TW 559 183 U ist es bekannt, eine Hydraulikleitung drehbar an eine Bremszange anzubringen.

Die DE 10 2007 048 350 A1 offenbart eine hydraulisch betätigte Scheibenbremse mit zumindest zwei auf einen Bremsbelag einwirkenden Bremskolben, welche in einem Bremsengehäuse angeordnet sind, wobei die hydraulische Scheibenbremse eine hydraulische Synchronisationsvorrichtung zur Schrägverschleißminderung des Bremsbelags aufweist, welche zwischen einer Eingangsdruckleitung zur Bremsbetätigung und dem Bremskolben zwischengeschaltet ist.

Die JP 2001227572 A offenbart eine Scheibenbremse mit einem Stufenkolben.

Aus der JP 63083419 A ist eine Bremse mit einem Kolben bekannt, wobei der Kolben an der einen Seite eine Ausnehmung aufweist, in der ein Federelement angeordnet ist.

Aus der US 2009/0293715 A1 ist ein Hydraulikzylinder für ein Bremssystem bekannt. Ein im Zylinder angeordneter Kolben weist unterschiedliche Querschnitte auf.

Die EP 1 070 136 A1 offenbart ein Bremssystem mit zwei Bremsleitungen, die mit einem Hydraulikzylinder verbunden sind.

Aufgabe der vorliegenden Erfindung ist es, eine kompakt aufgebaute, wirksamere Bremszange zur Verfügung zu stellen, die besonders ausfallsicher aufgebaut ist.

Gelöst wird diese Aufgabe durch eine Bremszange mit den Merkmalen des Anspruchs 1.

Die Verwendung eines Stufenkolbens hat den Vorteil, dass ein Bremskraftverstärker in der Bremszange realisiert wird.

Grundsätzlich ist es denkbar, das Rückstellelement, welches als Federelement, insbesondere Schraubenfeder, ausgebildet sein kann, auch im Arbeitsraum vorzusehen. Dies hätte jedoch den Nachteil, dass das Rückstellelement mit einem geringeren Durchmesser ausgebildet werden müsste. Außerdem würde das Rückstellelement an dieser Position die Baugröße der Bremszange vergrößern. Der Ringraum ist für die Funktion der Bremszange ohnehin notwendig. Er wird erfindungsgemäß auch für die Anordnung des Rückstellelements genutzt. Dadurch wird keine zusätzliche Baulänge verursacht. Die Anordnung des Rückstellelements im Ringraum bewirkt weiterhin, dass der vom Stufenkolben zurückgelegte Weg durch das Rückstellelement begrenzt wird. Außerdem kann an dieser Stelle eine relativ weiche Feder bei kleiner axialer Länge als Rückstellelement vorgesehen werden, die die gleiche Steifigkeit aufweist wie eine Feder, die im Arbeitsraum alternativ mit deutlich größeren Dimensionen angeordnet werden müsste.

Erfindungsgemäß kann weiterhin vorgesehen sein, dass der Ringraum ohne Atmosphärenanschluss ausgebildet ist. Wird eine Bremsung ausgeführt, wird demnach die Luft, die im Ringraum vorhanden ist, komprimiert. Dadurch kann die Bremskraft begrenzt werden. Außerdem kann das Rückstellelement im Ringraum dadurch schwächer dimensioniert werden. Wenn kein Atmosphärenanschluss vorhanden ist, kann auch sichergestellt werden, dass kein Schmutz in den Zylinderraum gelangt. Die komprimierte Luft kann auch weiterhin das Rückstellelement unterstützen, um den Stufenkolben in seine Ausgangsstellung zurückzubewegen, wenn keine Bremsung benötigt wird. Auch die Ausfallsicherheit der Bremse wird durch den fehlenden Atmosphärenanschluss erhöht. Tritt eine Undichtigkeit am Stufenkolben auf, so gelangt die Hydraulikflüssigkeit lediglich in den Ringraum. Sie kann die Bremszange jedoch nach wie vor nicht verlassen. Wäre ein Atmosphärenanschluss vorhanden, so würde die Bremsflüssigkeit entweichen mit der Folge, dass keine Bremsung mehr durchgeführt werden könnte.

Weitere Vorteile ergeben sich, wenn zumindest ein Bremskolben der Bremszange im Gehäuse angeordnet ist. Dies bedeutet, dass sowohl der Stufenkolben als auch zumindest ein Bremskolben der Bremszange im Gehäuse angeordnet ist. Der Stufenkolben selbst wird demnach nicht verwendet, um direkt die Bremsbacken zu beaufschlagen. Dies erfolgt durch den zumindest einen Bremskolben. Anders als bei der bekannten Bremse wird durch die Kombination eines Stufenkolbens mit einem Bremskolben eine Art Bremskraftverstärker realisiert. Durch die Anordnung des zumindest einen Bremskolbens im Gehäuse der Bremszange kann eine besonders stabile und platzsparende Ausgestaltung der Bremszange erreicht werden.

Vorzugsweise sind zwei Bremskolben vorgesehen, sodass zwei bewegbare Bremsbacken vorgesehen werden können, die durch die Bremskolben bewegt werden können.

Gemäß einer Weiterbildung kann vorgesehen sein, dass der Stufenkolben und der zumindest eine Bremskolben im Gehäuse parallel ausgerichtet sind. Dadurch kann eine platzsparende Anordnung im Gehäuse der Bremszange realisiert werden und das Gehäuse insgesamt relativ klein bauend ausgeführt werden.

Weitere Vorteile ergeben sich, wenn die Zuleitung(en) zu dem oder den Bremskolben bzw. den Zylinderräumen, in denen diese angeordnet sind, im Gehäuse angeordnet oder ausgebildet sind. Dadurch sind die Zuleitungen besonders geschützt angeordnet. Sie können nicht einfach zerstört werden. Eine Leckbildung kann dadurch effektiv verhindert werden. Außerdem kann auf diese Weise verhindert werden, dass sich eine Zuleitung aufweitet, was zu einer verschlechterten Bremswirkung führen würde.

Dem kompakten Aufbau der Bremszange ist ferner dienlich, wenn der oder die Bremskolben und der Stufenkolben im Gehäuse quer zu deren Bewegungsrichtung übereinander oder nebeneinander angeordnet sind. Insbesondere sind die Bremskolben und der Stufenkolben vorzugsweise nicht in Bewegungsrichtung hintereinander angeordnet.

Zur Ankopplung einer Hydraulikleitung an die Bremszange kann ein Ankoppelelement vorgesehen sein, welches in das Gehäuse integriert sein kann und an dem Gehäuse drehbar angeordnet ist. Dadurch wird eine drehbare Verbindung zwischen Gehäuse und Hydraulikleitung ermöglicht. Eine Integration des Ankoppelelements in die Bremszange wirkt Beschädigungen durch Stürze des Fahrrads entgegen. Das Ankoppelelement kann dabei ein Anschlussstück und eine Anschlussverschraubung umfassen.

Im Stufenkolben ist ein Ventil angeordnet. Dabei kann das Ventil zunächst geöffnet sein. Wenn demnach über eine Betätigungsvorrichtung Hydraulikflüssigkeit zur Bremszange gefördert wird, durchströmt die Hydraulikflüssigkeit zunächst das Arbeitsvolumen, das Ventil und das Füllvolumen und gelangt in den oder die Zylinderräume, in denen der oder die Bremskolben angeordnet sind. Dies entspricht einer so genannten Füllphase. Wenn nun sämtliche Räume in der Bremszange mit Hydraulikflüssigkeit gefüllt sind und die Bremsbeläge, die durch die Bremskolben beaufschlagt sind, an der Bremsscheibe anliegen, steht an beiden Seiten des Stufenkolbens (im Füllvolumen und Arbeitsvolumen) der gleiche Druck an. Da die Stufenkolbenabschnitte jedoch unterschiedliche Querschnittsflächen aufweisen, bewirkt dies, dass der Stufenkolben im Zylinderraum verlagert wird. Bei der Verlagerung des Stufenkolbens wird das Ventil geschlossen, sodass bei einer weiteren Druckbeaufschlagung mittels der Betätigungsvorrichtung der Stufenkolben verlagert wird und die Hydraulikflüssigkeit im Arbeitsvolumen des Zylinderraums wirksam wird. Dies bedeutet, dass bei einer weiteren Betätigung der Betätigungsvorrichtung die Bremskolben weiter in Richtung Bremsscheibe bewegt werden und somit eine Bremsung erfolgt.

Dabei kann das Ventil ein Stößel aufweisen, der sich an dem Ankoppelelement, insbesondere dessen Anschlussverschraubung, abstützt. Dadurch ergibt sich eine sehr kompakte Baulänge der Bremszange. Es muss kein zusätzliches Abstützelement für den Ventilstößel vorgesehen werden, da dieser sich an dem Ankoppelelement selbst abstützen kann. Dadurch kann die Anzahl der Bauteile reduziert werden.

In den Rahmen der Erfindung fällt außerdem eine Bremsanlage mit den Merkmalen des Anspruchs 9. Dadurch, dass kein
Volumenausgleichsbehälter vorgesehen ist, ergibt sich ein vollständig geschlossenes System. Außerdem kann die Betätigungsvorrichtung kompakter aufgebaut werden, da an ihr kein Volumenausgleichsbehälter vorgesehen werden muss. Auch die Wirksamkeit der Bremsanlage wird dadurch erhöht.

Bei Überhitzung einer Bremsanlage, beispielsweise durch Dauerbremsungen, kann es dazu kommen, dass Hydraulikflüssigkeit, die Wasser enthalten kann, wodurch der Siedepunkt sinkt, verdampft, wodurch eine Volumenvergrößerung erfolgt. Bei Bremsen, die einen Ausgleichsbehälter aufweisen, kann deshalb nach dem Lösen der Bremse Hydraulik (= Bremsflüssigkeit) in den Ausgleichsbehälter gedrückt werden. Beim nächsten Bremsversuch greift der Fahrer ins Leere, da er kompressiblen Dampf zusammendrückt und die Bremse daher nicht anspricht.

Es sind grundsätzlich hydraulische Scheibenbremsanlagen bekannt, die keinen Ausgleichsbehälter im Bremsgriff aufweisen. Solche Scheibenbremsanlagen, die keinen Stufenkolben aufweisen, haben jedoch das Problem, dass bei Erwärmung der Hydraulikflüssigkeit der Druckpunkt der Bremsung stark verändert wird. Die konstante hydraulische Übersetzung führt zu einem Wandern des Bremshebels entgegen der Betätigungsrichtung.

Bei einer Ausführungsform der erfindungsgemäßen Bremsanlage, bei der die Bremszange einen Stufenkolben aufweist und die Betätigungsvorrichtung keinen Ausgleichsbehälter aufweist, tritt kein Wandern des Betätigungselements (Bremshebels) auf. Aufgrund der Stufenkolbentechnik wirkt in der Füllphase, wenn also die Bremsbacken über die Bremskolben an die Bremsscheibe angelegt werden, ein kleines Übersetzungsverhältnis. Durch die Auslegung des Übersetzungsverhältnisses kann das Hebelwandern entgegen der Betätigungsrichtung auf ein vernachlässigbares Maß begrenzt werden.

Darüber hinaus weist die erfindungsgemäße Bremsanlage gegenüber bekannten Scheibenbremsanlagen mit Ausgleichsbehälter den Vorteil einer höheren Ausfallsicherheit auf. Wird die erfindungsgemäße Bremsanlage aufgrund einer Dauerbremsung überhitzt, führt das Verdampfen der Bremsflüssigkeit nicht zum Ausfall der Bremsanlage, sondern lediglich zur Verstärkung der Bremswirkung. Die Bremswirkung verstärkt sich mit zunehmender Erwärmung. Das Zweirad kommt dann ohne Unfallfolgen zum Stehen. Ein Ausfall der Bremsanlage wie im Stand der Technik kann nicht erfolgen.

Die Ausgestaltung der Bremsanlage mit einem Stufenkolben und einem geschlossenen hydraulischen System hat weiterhin den Vorteil, dass das Lüftspiel erhöht werden kann, da beim Rückhub ein Unterdruck erzeugt wird. Dies ist Folge der niedrigen Übersetzung in der Füllphase.

Bei der erfindungsgemäßen Bremsanlage kann die erfindungsgemäße Bremszange grundsätzlich mit jeder Art von Betätigungsvorrichtung, insbesondere Bremsgriff, kombiniert werden. Besondere Vorteile ergeben sich, wenn dieser Bremsgriff keinen Ausgleichbehälter aufweist. Es können dabei herkömmliche Bremsgriffe zum Einsatz kommen, jedoch auch spezielle Bremsgriffe, wie sie in der Figurenbeschreibung näher erläutert werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine Explosionsdarstellung einer Bremszange einer erfindungsgemäßen Bremsanlage;
- Fig. 2: eine Schnittdarstellung der Bremszange der Fig. 1;
- Fig. 3: eine Explosionsdarstellung einer ersten Ausführungsform einer erfindungsgemäßen Betätigungsvorrichtung;
- Fig. 4: eine Längsschnittdarstellung der Ausführungsform der Fig. 3;
- Fig. 5: eine Explosionsdarstellung einer zweiten Ausführungsform einer erfindungsgemäßen Betätigungsvorrichtung;
- Fig. 6: eine Längsschnittdarstellung der Ausführungsform der Fig. 5.

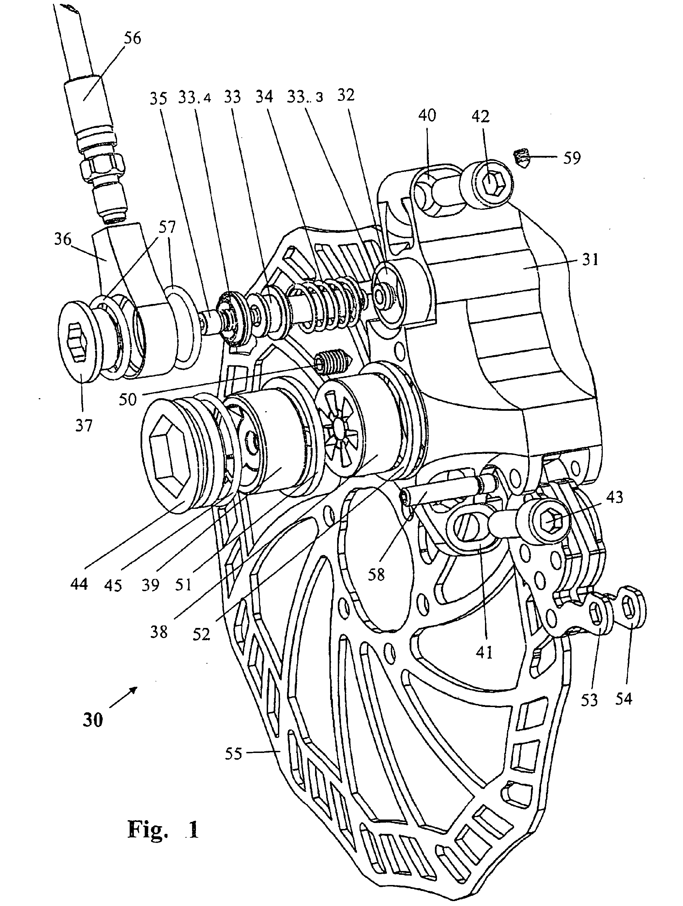

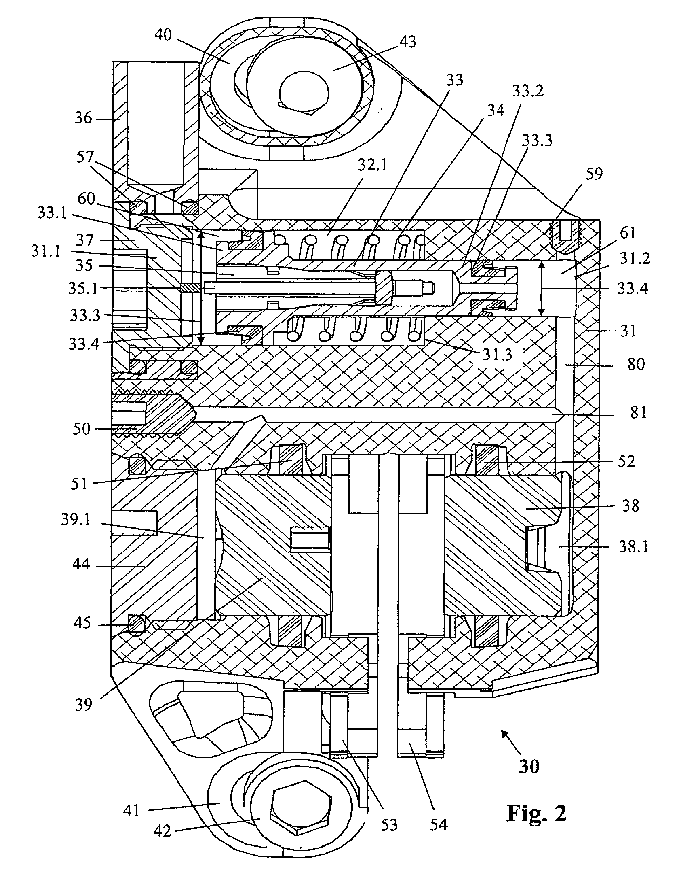

Die Fig. 1 zeigt eine Bremszange 30 in einer Explosionsdarstellung und die Fig. 2 in einer Schnittdarstellung. Die Bremszange 30 weist ein Gehäuse 31 mit einem Zylinderraum 32 auf. In dem Zylinderraum 32 ist ein Stufenkolben 33 angeordnet, der einen Abschnitt 33.1 mit größerem Querschnitt und einen Abschnitt 33.2 mit kleinerem Querschnitt aufweist. Zwischen dem Abschnitt 33.1 und der Gehäusewand 31.1 ist ein Füllvolumen 60 und zwischen dem Abschnitt 33.2 und der Gehäusewand 31.2 ist ein Arbeitsvolumen 61 ausgebildet. Der Zwischenraum zwischen dem Abschnitt 33.1 und dem Gehäuseabschnitt 31.3 bildet einen Ringraum 32.1. Der Stufenkolben 33 stützt sich über ein Rückstellelement 34 an dem Gehäuseabschnitt 31.3 ab.

Beidseits des Stufenkolbens 33 sind Kolbendichtringe 33.3, 33.4 vorgesehen. Hydraulikflüssigkeit wird durch ein Anschlussstück 36 zum Anschluss einer Hydraulikleitung 56 zugeführt, welches über eine Anschlussverschraubung 37 am Gehäuse 31 gehalten und in dieses integriert ist, jedoch relativ zum Gehäuse 31 um die Achse des Zylinderraums 32 schwenkbar ist. Das Anschlussstück 36 und die Anschlussverschraubung 37 sind Teile eines Ankoppelelements. Im gezeigten Ausführungsbeispiel bildet die Anschlussverschraubung 37 auch Teil der Gehäusewand 31.1

Das Vorsehen eines Stufenkolbens hat den Vorteil, dass dadurch einfach ein Bremskraftverstärker realisiert wird. Der Bremskraftverstärker wird dabei innerhalb des Gehäuses realisiert. Dies spart Gewicht, Kosten und ermöglicht die Kombination von einem schlanken Design bei einer erhöhten Bremskraft. Außerdem entsteht der hohe Druck für die Bremsung erst im Gehäuse, was die Verwendung von preisgünstigen, weniger druckbeständigen Hydraulikleitungen ermöglicht.

Innerhalb des Stufenkolbens 33 ist ein Ventil 35 angeordnet. Bei Einleitung einer Bremsung ist das Ventil 35 zunächst geöffnet und ermöglicht ein freies Durchströmen von Hydraulikflüssigkeit bis zur Anlage der Bremsbeläge 53, 54 an der Bremsscheibe 55. Das Ventil 35 ist durch Anlage des Ventilstößels 35.1 an der Anschlussverschraubung 37 bei nach rechts verlagertem Stufenkolben 33 geöffnet. Die Anschlussverschraubung 37 weist eine Anlage 37.1 für den Ventilstößel 35.1 auf.

Die Bremsanlage, umfassend eine Betätigungsvorrichtung, nicht arbeitenden Stufenkolben 33 und die Bremskolben 38, 39, arbeitet in dieser Phase mit einem geringen Verstärkungsfaktor. Dies bedeutet, dass mit geringem von einem Betätigungselement einer Betätigungsvorrichtung zurückgelegtem Weg eine relativ große Verstellung der Bremskolben 38, 39 erfolgt.

Sobald die Beläge 53, 54 an der Bremsscheibe 55 anliegen, baut sich ein hydraulischer Druck auf, der auf beiden Seiten des Stufenkolbens 33 gleich groß ist. Da die Kolbenflächen an den Stirnseiten unterschiedlich groß sind, wird der Stufenkolben jedoch nach rechts bewegt.

Entsprechend der Flächendifferenz der Kolbenflächen 33.3, 33.4 des Stufenkolbens 33 wird der Stufenkolben 33 daher gegen das Rückstellelement 34 gedrückt und gegen dessen Rückstellkraft und unter Kompression von im Ringraum enthaltener Luft bewegt. Die Bewegung des Stufenkolbens 33 bewirkt ein Verschließen des Ventils 35.

Durch das Kräftegleichgewicht beidseits des Stufenkolbens 33 ergibt sich trotz geringen Betätigungsdruckes im Füllvolumen 60 ein hoher Bremssatteldruck im Arbeitsraum 61 zur Anlage der Kolben 38, 39 an die Bremsbeläge 53, 54.

Die Bremsanlage arbeitet in dieser Phase mit einem großen Verstärkungsfaktor.

Die Bremszange 30 mit integriertem Stufenkolben 33 kann daher als Bremszange 30 mit integriertem Bremskraftverstärker bezeichnet werden.

Der Ringraum 32.1 weist keinen Atmosphärenanschluss auf. Eintritt von Schmutz kann so vermieden werden.

Die erfindungsgemäße Bremsanlage mit integriertem Bremskraftverstärker besitzt verschiedene Vorteile gegenüber handelsüblichen Scheibenbremsanlagen, die im Folgenden erläutert werden.

Die Abdichtung der Kolben 38, 39 erfolgt durch Kolbendichtringe 51, 52 in einer profilierten Gehäusenut. Sie erzeugt nach dem Bremsvorgang ein Zurückziehen der Kolben 38, 39. Während bei herkömmlichen Bremsen allein die Kolbendichtringe 51, 52 für das Zurückziehen verwendet werden, werden sie hier durch einen Unterdruck unterstützt, der beim Rückhub des Stufenkolbens entsteht. Dieser Effekt tritt bei herkömmlichen Bremsen mit großer Übersetzung und ohne Füllphase nicht oder kaum auf.

Da die erfindungsgemäße Bremsanlage zunächst mit geringem Verstärkungsfaktor arbeitet, können die Kolben 38,39 größere Abstände von der ungebremsten Ausgangsposition bis zur Anlage der Bremsbeläge 53, 54 an der Bremsscheibe 55 überbrücken.

Daher ist mit der erfindungsgemäßen Bremsanlage ein größeres Lüftspiel zu realisieren als mit handelsüblichen Scheibenbremsanlagen. Das geringe Lüftspiel an normalen Scheibenbremsanlagen führt zu unangenehmen Geräuschen durch Schleifen der Beläge 53, 54 an der Scheibe 55.

Mit der erfindungsgemäßen Bremsanlage ist es durch den Einsatz einer manuellen Betätigungsvorrichtung und einer Bremszange 30 mit Bremskraftverstärker möglich, trotz kleiner Handkräfte große Bremskräfte zu erzielen.

Die Kolben 38, 39 sind im Gehäuse 31 angeordnet und dort durch einen Deckel 44 gehalten. Zwischen Deckel 44 und Gehäuse 31 ist ein O-Ring 45 vorgesehen.

An dem Gehäuse 31 sind zwei Befestigungsöffnungen 40, 41 vorgesehen, durch die Befestigungsmittel 42, 43 hindurchsteckbar sind. Hierdurch wird eine Postmount-Befestigungsanordnung realisiert. So ist es möglich, die Bremszange direkt an bestehende Fahrradrahmen oder Gabeln zu montieren.

Die Entlüftungsschraube 50 dient der Entlüftung des Systems. Auch andere Positionen und Arten der Entlüftung sind denkbar.

Damit die Bremsbeläge den Kolben 38, 39 folgen, sind die Kolben als Kunststoffkolben ausgebildet und mittig mit einem Magneten versehen.

Alternativ können die Beläge durch Federn oder Ähnliches zurückgedrückt werden. In der Fig. 1 sind weiterhin Dichtringe 57, ein Sicherungsstift 58 und eine Madenschraube 59 zu erkennen.

Der Fig. 2 kann man entnehmen, dass von dem Arbeitsvolumen 61 lediglich eine Leitung 80 abgeht, die zum Zylinderraum 38.1 eines ersten Bremskolbens 38 führt. Von der Leitung 80 zweigt eine weitere Leitung 81 ab, die zum Zylinderraum 39.1 führt, in dem der Bremskolben 39 angeordnet ist. Die Leitungen 80, 81 verlaufen vollständig innerhalb des Gehäuses 31, wodurch sie geschützt angeordnet sind und sich nicht aufweiten können.

Der Darstellung der Fig. 2 kann man auch entnehmen, dass sowohl der Stufenkolben 33 als auch die Bremskolben 38, 39 in gleicher Richtung bewegbar sind. Sie sind daher bezüglich ihrer Bewegungsrichtung parallel zueinander angeordnet. Außerdem ist zu erkennen, dass der Stufenkolben 33 über den Bremskolben 38, 39 angeordnet ist. Insgesamt ergibt sich dadurch ein besonders kompakter Aufbau der Bremszange 30.

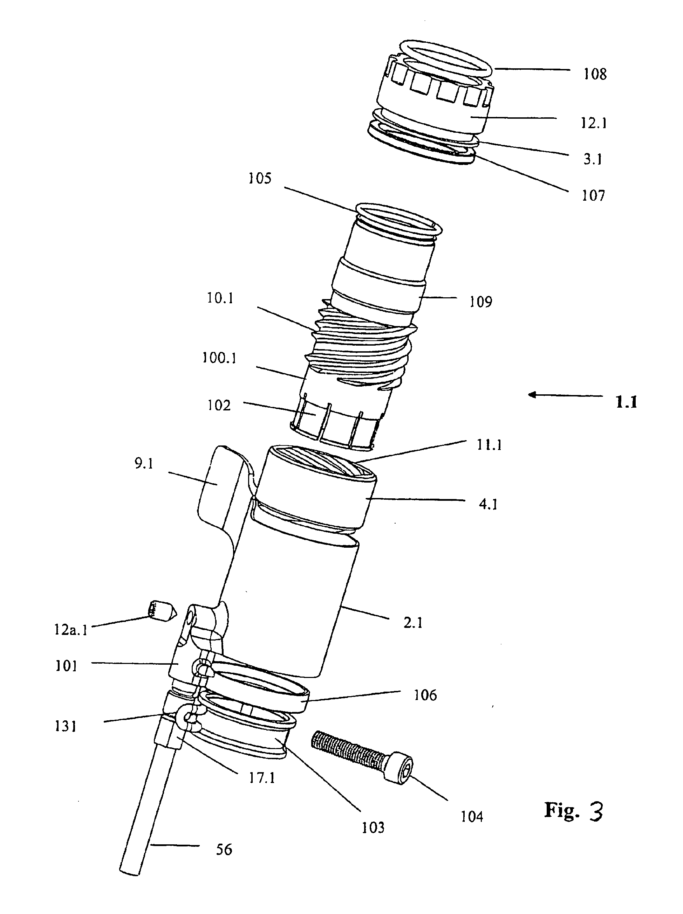

Die Fig. 3 zeigt eine Explosionsdarstellung einer ersten Ausführungsform einer Betätigungsvorrichtung 1.1, die Teil einer Bremsanlage ist, die eine in den Fig. 1,2 beschriebene Bremszange aufweist. Diese umfasst ein Hydraulikzylinderteil 2.1, welches ein Betätigungselement 9.1 aufweist. Über das Betätigungselement 9.1 kann das Hydraulikzylinderteil 2.1 in eine Drehbewegung um seine Längsachse versetzt werden. Die Längsachse des Hydraulikzylinderteils 2.1 stellt auch die Dreh-/Schwenkachse des Betätigungselements 9.1 dar. In dem Hydraulikzylinderteil 2.1 ist eine Steilgewindebuchse 4.1 drehfest angeordnet, insbesondere dort verklebt, verschraubt, form- oder kraftschlüssig gehalten. Die Steilgewindebuchse 4.1 weist ein Innengewinde 11.1 auf, welches als Steilgewinde ausgebildet ist. Dieses Steilgewinde wirkt mit einem Steilgewindeteil 10.1 eines Grundkörpers 100.1 der Betätigungsvorrichtung 1.1 zusammen.

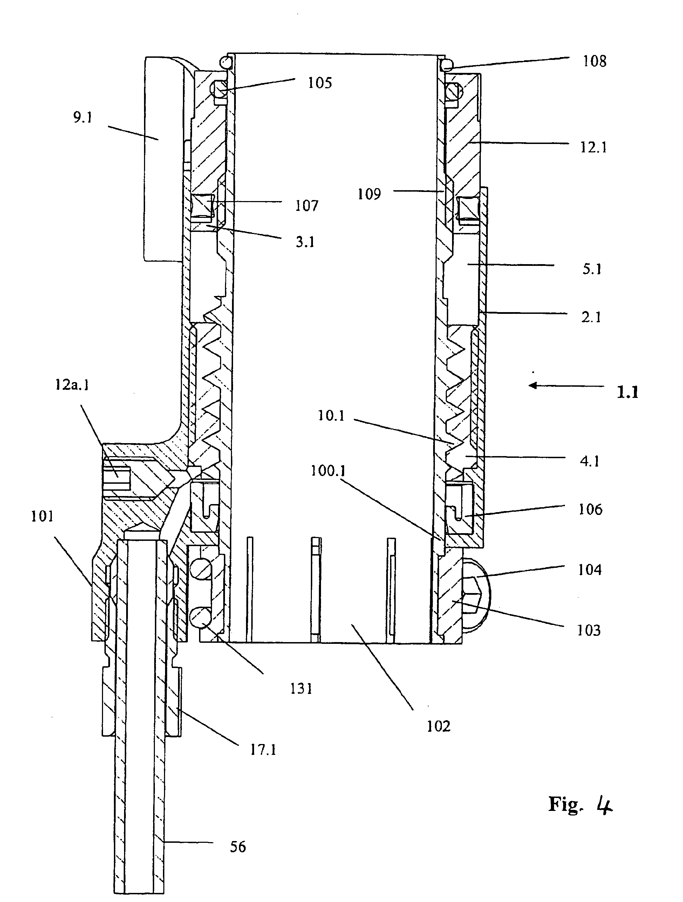

Im hinteren Bereich des Grundkörpers 100.1 ist ein Volumenverdrängungselement 3.1 vorgesehen. In zusammengebautem Zustand ist das Volumenverdrängungselement 3.1 zumindest teilweise in einem Arbeitsvolumen 5.1 (siehe Fig. 4) des Hydraulikzylinderteils 2.1 angeordnet. Bei einer Betätigung der Betätigungsvorrichtung 1.1, d. h. wenn das Hydraulikzylinderteil 2.1 in eine Drehbewegung versetzt wird, wird dieses auch axial relativ zum Volumenverdrängungselement 3.1 verlagert, sodass Hydraulikflüssigkeit aus dem Arbeitsvolumen 5.1 verdrängt wird. Im Betrieb ist das Volumenverdrängungselement 3.1 also ortsfest angeordnet. Die verdrängte Hydraulikflüssigkeit gelangt über eine Nut oder eine Aussparung im Steilgewindeteil 10.1 oder der Steilgewindebuchse 4.1 zu einem Leitungsabgang 101. An diesen ist über ein Anschlussstück 17.1 eine Hydraulikleitung 56 angeschlossen. Die Schraube 12a.1 dient zur Entlüftung des Systems. Der Grundkörper 100.1 ist hohlzylindrisch ausgebildet und kann auf eine Lenkerstange aufgeschoben werden. An einem Ende weist der Grundkörper 100.1 eine geschlitzte Verjüngung 102 auf. An dieser Stelle kann der Grundkörper 100.1 über eine Schelle 103 mittels der Schraube 104 am Lenker fixiert werden. Über die Schelle 103 kann auch eine Schalteinrichtung montiert werden. Durch Lösen der Schelle 103 kann der Grundkörper 100.1 gegenüber der Schelle 103 verdreht und damit in seiner Lage verändert werden. Die Rückstellung des Hydraulikzylinderteils 2.1 nach Bremsbetätigung kann durch ein Rückstellmittel 131 erfolgen, welches in der Ausführungsform der Fig. 3 als Gummiband ausgebildet ist. Das Rückstellmittel 131 ist um den Leitungsabgang 101 gewickelt und stützt sich an der Schelle 103 ab.

Das Volumenverdrängungselement 3.1 dient außerdem als Volumenausgleichselement bzw. Einstellmittel 12.1. Durch axiale Verlagerung des Einstellmittels 12.1, insbesondere durch Aufschrauben auf das Gewinde 109 des Grundkörpers 100.1, kann ein Volumenausgleich erfolgen, z. B. wenn dies aufgrund von Belagsverschleiß der Bremse erforderlich wird. Das Einstellmittel 12.1 und damit das Volumenverdrängungselement 3.1 wird durch ein Dichtelement 105 in der eingestellten Position gehalten. Im Betrieb ist das Volumenausgleichselement also ortsfest angeordnet und kann nur zu

Einstellzwecken, wenn kein Bremsbetrieb erfolgt, manuell verstellt werden.

Die Betätigungsvorrichtung 6.1, insbesondere deren bewegliche Teile, werden gegeneinander weiterhin durch die Dichtungen 105, 106 und 107 abgedichtet. Das Anschlagelement 108 dient dem Endanschlag des Einstellmittels 12.1. Das Anschlagelement 108 kann beispielsweise als Sprengring ausgeführt sein. Die Betätigungsvorrichtung 1.1 weist keinen Volumenausgleichsbehälter auf.

In der Fig. 4 ist eine Schnittdarstellung durch die zusammengebaute Betätigungsvorrichtung 1.1 gemäß Fig.3 dargestellt. Es werden die gleichen Bezugsziffern verwendet wie in der Fig. 3. Hier ist ersichtlich, dass bei einer Betätigung der Betätigungsvorrichtung 1.1, also einem Verdrehen des Hydraulikzylinderteils 2.1, auch eine axiale Verlagerung des Hydraulikzylinderteils 2.1 erfolgt, sodass Hydraulikflüssigkeit aus dem Arbeitsvolumen 5.1 verdrängt wird. In diesem Ausführungsbeispiel ist das Arbeitsvolumen ringförmig ausgebildet. Weiterhin ist zu erkennen, dass der Grundkörper 100.1 ein Gewinde 109 aufweist, auf das das Einstellmittel 12.1 aufschraubbar ist. Dadurch lässt sich das Einstellmittel 12.1 axial verstellen und damit die wirksame Größe des Arbeitsvolumens einstellen.

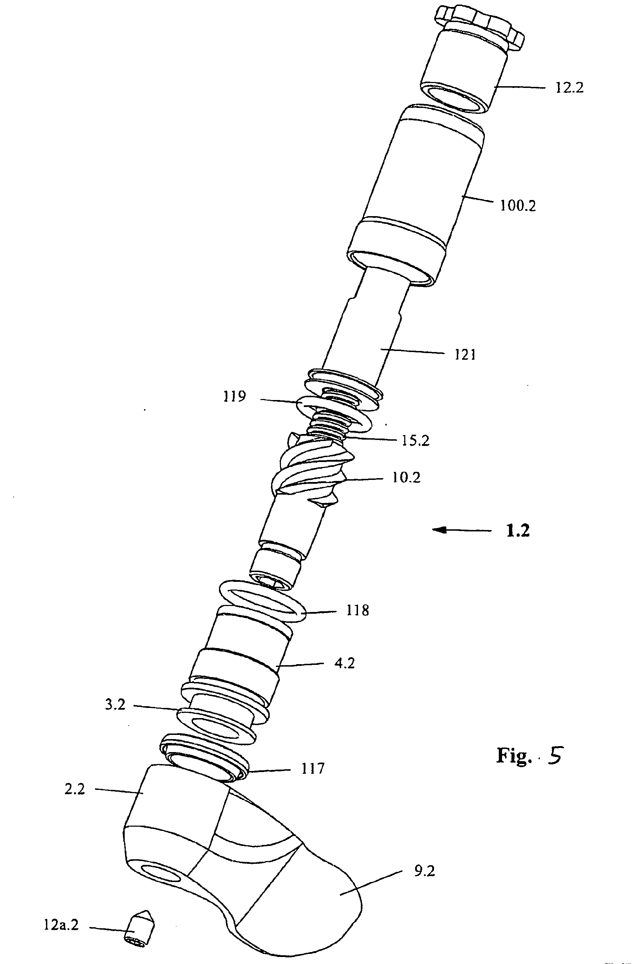

Die Fig. 5 zeigt eine Explosionsdarstellung einer zweiten Ausführungsform einer Betätigungsvorrichtung 1.2 zur Verwendung mit einer Bremszange. Die Betätigungsvorrichtung 1.2 weist einen Grundkörper 100.2 auf. In dem Grundkörper 100.2 ist drehfest, insbesondere durch Verkleben oder Verschrauben, eine Steilgewindebuchse 4.2 angeordnet. Diese trägt ein Innengewinde, das mit einem Außengewinde eines Steilgewindeteils 10.2 zusammenwirkt. Das Steilgewindeteil 10.2 ist drehfest mit einem Hydraulikzylinderteil 2.2 verbunden, welches ein Arbeitsvolumen 5.2 ausbildet. In dem Arbeitsvolumen 5.2 ist ein Volumenverdrängungselement 3.2 angeordnet. Das Hydraulikzylinderteil 2.2 steht mit einem Bedienelement 9.2 in Verbindung. Wird demnach das Bedienelement 9.2 und damit das Hydraulikzylinderteil 2.2 um die Längsachse des Hydraulikzylinderteils bzw. der Betätigungsvorrichtung 1.2 verdreht, so wird dabei das Steilgewindeteil 10.2 in die Steilgewindebuchse 4.2 eingeschraubt und dadurch das Hydraulikzylinderteil 2.2 axial verlagert. Dadurch wird Hydraulikflüssigkeit aus dem Arbeitsvolumen verdrängt, da das Hydraulikzylinderteil 2.2 axial relativ zum ortsfest angeordneten Volumenverdrängungselement 3.2 verlagert wird.

Die Rückstellung des Hydraulikzylinderteils 2.2 nach einer Betätigung erfolgt durch Rückstellmittel 15.2, die als Schraubenfeder ausgebildet sind.

Ein Einstellmittel 12.2 zur Verstellung eines Volumenausgleichselements 121 ist ebenfalls vorgesehen. Dieses kann in den Grundkörper 100.2 eingeschraubt werden. Durch diese Maßnahme kann das für die Hydraulikflüssigkeit vorgesehene Volumen verändert werden. Dadurch kann eine Nachstellung erfolgen, beispielsweise wenn Bremsbeläge abgenutzt werden.

Über eine Schraube 12a.2 kann die Betätigungsvorrichtung 1.2 entlüftet werden. Zur Abdichtung der beweglichen Teile gegeneinander sind Dichtungen 117, 118, 119 vorgesehen.

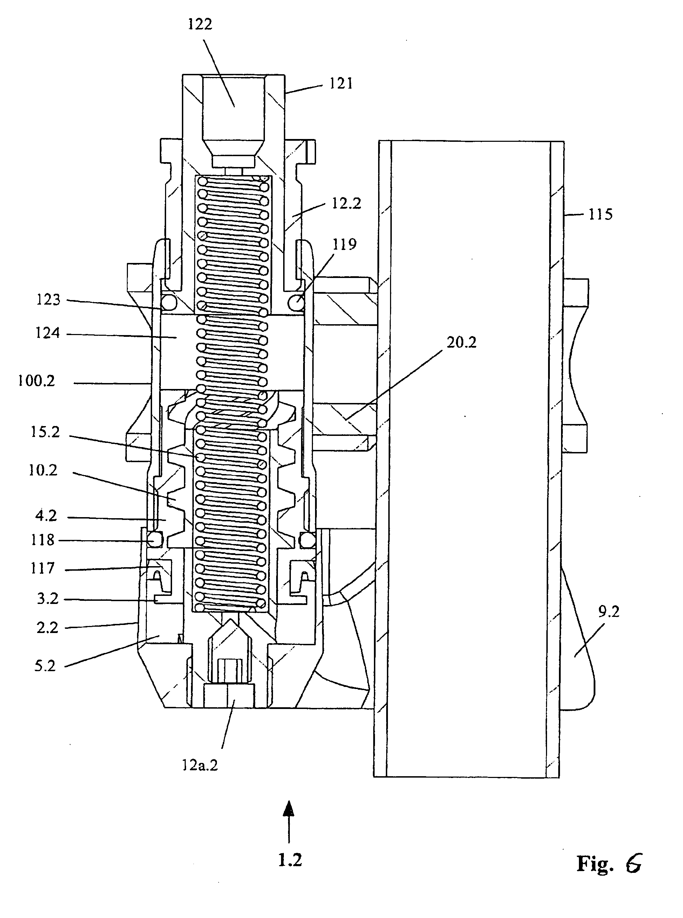

In der Fig. 6 ist eine Schnittdarstellung durch die Ausführungsform gemäß Fig. 4 gezeigt. Hier ist deutlich zu erkennen, dass im Hydraulikzylinderteil 2.2 ein Arbeitsvolumen 5.2 vorhanden ist. Wird nun das Hydraulikzylinderteil 2.2 bei einer Betätigung des Betätigungselements 9.2 zusammen mit dem Steilgewindeteil 10.2 in eine Drehbewegung versetzt, so wird das Steilgewindeteil 10.2 in die Steilgewindebuchse 4.2 eingeschraubt, sodass sich das Hydraulikzylinderteil 2.2 axial relativ zum Volumenverdrängungselement 3.2, welches ortsfest angeordnet ist, bewegt. Dadurch wird Hydraulikflüssigkeit aus dem Arbeitsvolumen 5.2 durch das im Wesentlichen hohlzylindrisch ausgebildete Steilgewindeteil 10.2 bis zu einem Leitungsabgang 122 verdrängt. Die Bewegung des Hydraulikzylinderteils 2.2 erfolgt gegen die Rückstellkraft eines Rückstellmittels 15.2, welches sich zum einen in dem hohlzylindrisch ausgebildeten Steilgewindeteil 10.2 und zum anderen an einem Volumenausgleichselement 121 abstützt.

Das Volumenausgleichselement 121 liegt mit seinem Ringbund 123 an dem Einstellmittel 12.2 an. Das Einstellmittel 12.2 kann in den Grundkörper 100.2 eingeschraubt werden. Dabei wird das Volumenausgleichselement 121 axial verlagert, wodurch das Volumen 124 und damit das gesamte für die Hydraulikflüssigkeit zur Verfügung stehende Volumen verändert wird. Dadurch kann ein Nachstellen erfolgen, wenn beispielsweise Bremsbeläge abgenutzt werden. Die Betätigungsvorrichtung 1.2 ist über eine Befestigungsvorrichtung 20.2 an einer Lenkerstange 115 befestigt. Auch diese Ausführungsform weist keinen Volumenausgleichsbehälter auf.

## Patentansprüche

1. Bremszange (30) einer hydraulischen Scheibenbremsanlage für ein Zweirad, mit einem Gehäuse (31), in dem ein Zylinderraum (32) ausgebildet ist, in dem ein Stufenkolben (33) mit zwei Abschnitten (33.1, 33.2) unterschiedlicher Querschnittsfläche angeordnet ist, wobei zwischen einer Gehäusewand (31.1) und einem Stufenkolbenabschnitt (33.1) größerer Querschnittsfläche ein Füllvolumen (60), zwischen einer Gehäusewand (31.2) und einem Stufenkolbenabschnitt (33.2) kleinerer Querschnittsfläche ein Arbeitsvolumen (61) und zwischen einem Gehäuseabschnitt (31.3) und dem Stufenkolbenabschnitt (33.1) größerer Querschnittsfläche ein Ringraum (32.1) ausgebildet ist, in dem ein Rückstellelement (34) angeordnet ist, **dadurch gekennzeichnet, dass** im Stufenkolben (33) ein Ventil (35) angeordnet ist.

2. Bremszange nach Anspruch 1, **dadurch gekennzeichnet, dass** der Ringraum (32.1) ohne Atmosphärenanschluss ausgebildet ist.

3. Bremszange nach einem der vorhergehenden Ansprüche, **dadurch gekennzeichnet, dass** zumindest ein Bremskolben (38, 39) der Bremszange (30) im Gehäuse (31) angeordnet ist.

4. Bremszange nach Anspruch 3, **dadurch gekennzeichnet, dass** der Stufenkolben (33) und der zumindest eine Bremskolben (38, 39) im Gehäuse (31) parallel ausgerichtet sind.

5. Bremszange nach einem der Ansprüche 3 oder 4, **dadurch gekennzeichnet, dass** die Zuleitung(en) (80, 81) zu dem oder den Bremskolben (38, 39) im Gehäuse (31) angeordnet oder ausgebildet sind.

6. Bremszange nach einem der vorhergehenden Ansprüche 3 bis 5, **dadurch gekennzeichnet, dass** der oder die Bremskolben (38, 39) und der Stufenkolben (33) im Gehäuse (31) quer zu deren Bewegungsrichtung übereinander oder nebeneinander angeordnet sind.

7. Bremszange nach einem der vorhergehenden Ansprüche, **dadurch gekennzeichnet, dass** zur Ankopplung einer Hydraulikleitung (56) an der Bremszange (30) ein Ankoppelelement vorgesehen ist, das an dem Gehäuse drehbar angeordnet ist.

8. Bremszange nach einem der vorhergehenden Ansprüche, **dadurch gekennzeichnet, dass** das Ventil (35) einen Stößel (35.1) aufweist, der sich an dem Ankoppelelement abstützt.

9. Bremsanlage mit einer Bremszange (30) gemäß einem der Ansprüche 1 bis 8, wobei eine mit der Bremszange (30) über eine Hydraulikleitung (56) in Verbindung stehende Betätigungsvorrichtung (1.1, 1.2) ohne Volumenausgleichsbehälter vorgesehen ist.

## Claims

1. A brake caliper (30) of a hydraulic disc brake assembly for a bicycle, said caliper (30) having a housing (31), in which a cylindrical chamber (32) is formed, in which a differential piston (33) is located which comprises two portions (33.1, 33.2) of different cross-sectional area, a filling volume (60) being formed between a housing wall (31.1) and the portion (33.1) of the differential piston having the larger cross-sectional area, a working volume (61) being formed between a housing wall (31.2) and the portion (33.2) of the differential piston having the smaller cross-sectional area, and an annular space (32.1) being formed between a housing portion (31.3) and the portion (33.1) of the differential piston having the larger cross-sectional area, a restoring element (34) being located in said annular space (32.1), **characterized in that** a valve (35) is provided in the differential piston (33).

2. A brake caliper according to Claim 1, **characterized in that** the annular space (32.1) is formed without any connection to the atmosphere.

3. A brake caliper according to one of the preceding claims, **characterized in that** at least one brake piston (38, 39) of the brake caliper (30) is located in the housing (31).

4. A brake caliper according to Claim 3, **characterized in that** the differential piston (33) and the at least one brake piston (38, 39) are oriented parallel to one another in the housing (31).

5. A brake caliper according to one of Claims 3 or 4, **characterized in that** the supply line or lines (80, 81) for the brake piston or pistons (38, 39) are located or formed in the housing (31).

6. A brake caliper according to one of the preceding Claims 3 to 5, **characterized in that** the brake piston or pistons (38, 39) and the differential piston (33) are placed one on top of the other or side by side in the housing (31) at right angles to their direction of movement.

7. A brake caliper according to one of the preceding claims, **characterized in that** a coupling element is rotatably mounted on the housing for connecting a hydraulic line (56) to the brake caliper (30).

8. A brake caliper according to one of the preceding claims, **characterized in that** the valve (35) has a tappet (35.1) which is supported against the coupling element.

9. A brake assembly having a brake caliper (30) according to one of Claims 1 to 8, in which an operating mechanism (1.1, 1.2) without a volume equalizing reservoir is provided, which communicates with the brake caliper (30) via a hydraulic line (56).

## Revendications

1. Etrier de frein (30) d'un système de frein à disque hydraulique pour un deux-roues, avec un carter (31) dans lequel est constitué un espace cylindrique (32) dans lequel est disposé un piston à gradins (33) avec deux tronçons (33.1, 33.2) ayant une surface de section transversale différente, un volume de remplissage (60) étant constitué entre une paroi (31.1) de carter et un tronçon (33.1) de piston à gradins ayant la surface de section transversale plus grande, un volume de travail (61) étant constitué entre une paroi (31.2) de carter et un tronçon (33.2) de piston à gradins ayant la surface de section transversale plus petite, et un espace annulaire (32.1) étant constitué entre un tronçon (31.3) de carter et le tronçon (33.1) de piston à gradins ayant la surface de section transversale plus grande, espace annulaire dans lequel est disposé un élément de rappel (34), **caractérisé en ce qu'**une soupape (35) est disposée dans le piston à gradins (33).

2. Etrier de frein selon la revendication 1, **caractérisé en ce que** l'espace annulaire (32.1) est constitué sans raccord à l'atmosphère.

3. Etrier de frein selon une des revendications précédentes, **caractérisé en ce qu'**au moins un piston de frein (38, 39) de l'étrier de frein (30) est disposé dans le carter (31).

4. Etrier de frein selon la revendication 3, **caractérisé en ce que** le piston à gradins (33) et le piston de frein (38, 39) au moins au nombre de un sont orientés parallèlement dans le carter (31).

5. Etrier de frein selon une des revendications 3 ou 4, **caractérisé en ce que** la/les conduite(s) d'alimentation (80, 81) conduisant au(x) piston(s) de frein (38, 39) est/sont disposée(s) ou constituée(s) dans le carter (31).

6. Etrier de frein selon une des revendications précédentes 3 à 5, **caractérisé en ce que** le/les piston(s) de frein (38, 39) et le piston à gradins (33) dans le carter (31) sont disposés de façon superposée ou juxtaposée transversalement à leur direction de déplacement.

7. Etrier de frein selon une des revendications précédentes, **caractérisé en ce que**, pour l'accouplement d'une conduite hydraulique (56) à l'étrier de frein (30), il est prévu un élément d'accouplement qui est disposé de façon à pouvoir tourner sur le carter.

8. Etrier de frein selon une des revendications précédentes, **caractérisé en ce que** la soupape (35) présente un poussoir (35.1) qui s'appuie sur l'élément d'accouplement.

9. Système de frein avec un étrier de frein (30) selon une des revendications 1 à 8, dans lequel est prévu un dispositif d'actionnement (1.1, 1.2), sans vase de compensation de volume, qui est en liaison avec l'étrier de frein (30) par le biais d'une conduite hydraulique (56).
